# EUROPEAN PATENT SPECIFICATION

(11) **EP 4 486 621 B1**
(45) Date of publication and mention of the grant of the patent: **21.01.2026**
(21) Application number: 22708607.1
(22) Date of filing: 28.02.2022
(51) Int. Cl.: B61B 13/08, B61B 13/10, E01B 25/30, E01D 18/00, E01D 19/00, E01D 21/00, E01D 21/06, F16L 1/024, F16L 1/036, F16L 1/10, F16L 3/26

(54) **METHOD FOR ERECTING A TRANSPORTATION STRUCTURE**
VERFAHREN ZUM ERRICHTEN EINER TRANSPORTSTRUKTUR
PROCÉDÉ POUR ÉRIGER UNE STRUCTURE DE TRANSPORT

(43) Date of publication of application: 08.01.2025
(73) Proprietor: ArcelorMittal, 1160 Luxembourg (LU)
(72) Inventor: SELLITTO, Giuseppe, 4000 Liège (BE); GREMLING, Michaël, 4100 Seraing (BE); DI SILVESTRO, Elena, 4140 Sprimont (BE)
(74) Representative: Lavoix
(86) International application number: PCT/IB2022/051728
(87) International publication number: WO 2023/161682

(56) References cited:
- WO-A1-2018/196928
- CN-A- 108 755 294
- CN-A- 109 024 103
- CN-A- 114 016 383
- US-A1- 2008 301 889

## Description

The present invention relates to a method for erecting a transportation structure comprising two assemblies of tube segments, each assembly being capable of being placed under low air pressure and through which pods may travel substantially free of air friction. This transportation system is often referred to as the hyperloop technology. The present invention also relates to the corresponding transportation structure.

Hyperloop technology is a proposed high-speed transportation system for both passenger and freight transport. It is basically a sealed system of tubes with low air pressure through which a pod may travel substantially free of air resistance or air friction. It has three major components: a tube, a pod and stations. The tube is a large sealed, low-pressure system that can be constructed above, below or on the ground. It contains the necessary infrastructure to ensure levitation/suspension, propulsion, braking... A vehicle runs inside this controlled environment and is often referred to as a pod. The pod employs electric levitation (either electro-magnetic or electro-dynamic) or aerodynamic levitation (using air-bearing skis) along with electromagnetic or aerodynamic propulsion to glide along a fixed guideway. A station is a facility where a pod can start or stop and where boarding/unboarding of passengers and loading/unloading of cargo are possible. A station is positioned at each extremity of the sealed system of tubes.

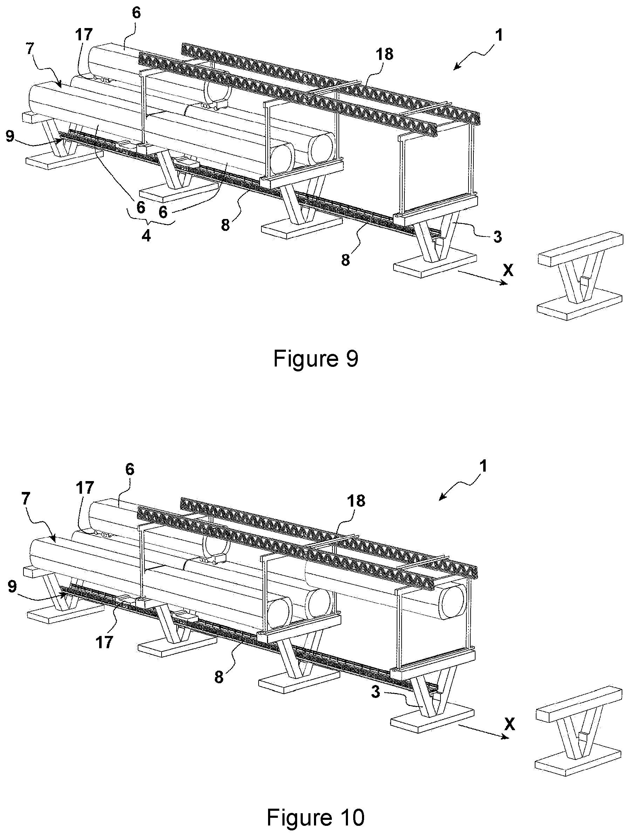

In the artists' views, an above-ground hyperloop structure is often represented in the form of tube segments whose ends simply rest on piers regularly spaced. This design is very appealing, but it does not provide a full understanding of important challenges during installation steps. One of these challenges is that the tube segments are huge pieces that cannot be easily transported to the construction site, even more so when the terrain is steep or difficult to access or if the hyperloop route is far away from existing roads. To avoid the transport of tube segments, it is known notably from US9517901 to manufacture and assemble the tubes on land with a movable tube fabrication machine (illustrated on Figure 9A) operable to move on land and directed along construction route. Alternatively, a moveable in-situ manufacturing system (illustrated on Figure 9B) may be located at a single location to make a number of tube sections (e.g., fifty tube sections), and then subsequently moved to a new location. In both cases, hyperloop routes can only be constructed if the moveable fabrication machine or the moveable manufacturing system can access the construction site. Moreover, among other drawbacks, it is worth mentioning that the energy supply might be tricky when moving along the construction route and, each time the machine/system would be moved, new electrical certifications may have to be obtained.

Document WO 2018/196928 A1 discloses a method for erecting a portion of a transportation structure comprising a plurality of piers, a first plurality of girders a second plurality of girders, the girders comprising tube segments. The method comprises conveying the girders using a transportation sledge.

Document CN109024103A discloses a transportation structure for pods travelling substantially free of air friction in an assembly of tube segments placed under low air pressure, portions of the transportation infrastructure comprising a plurality of piers as well as a first and second plurality of girders forming tube segments.

The aim of the present invention is therefore to remedy the drawbacks of the methods and structures of the prior art by providing a method for erecting an above-ground transportation structure which is compatible with rough terrains and for which the shipping of the different elements of the structure and their assembly is made easier.

For this purpose, a first subject of the present invention consists of a method for erecting a portion of a transportation structure comprising:
- a plurality of piers substantially regularly spaced along the longitudinal axis X of the portion of transportation structure,
- a plurality of platforms connected to the piers and forming a service pathway running from a first extremity of the portion of the transportation structure to a second one,
- a first plurality of girders positioned on at least some of the piers and forming:
   o a first assembly of tube segments, the first assembly being capable of being placed under low air pressure and capable of allowing the circulation of pods travelling substantially free of air friction in the tube segments,
   o a first rooftop transportation pathway running from the first extremity of the portion of the transportation structure to the second one,
   each girder of the first plurality of girders comprising:
   o a tube segment of the first assembly of tube segments,
   o a metallic structure embedding the tube segment of the first assembly of tube segments, the upper surface of the metallic structure being a portion of the first rooftop transportation pathway,
- a second plurality of girders positioned on at least some of the piers and forming:
   o a second assembly of tube segments, the second assembly being capable of being placed under low air pressure and capable of allowing the circulation of pods travelling substantially free of air friction in the tube segments,
   o a second rooftop transportation pathway running from the first extremity of the portion of the transportation structure to the second one, alongside the first rooftop transportation pathway,
   each girder of the second plurality of girders comprising:
   o a tube segment of the second assembly of tube segments,
   o a metallic structure embedding the tube segment of the second assembly of tube segments, the upper surface of the metallic structure being a portion of the second rooftop transportation pathway,
   the method comprising:
   o (i) starting from the first extremity, conveying with vehicle(s) the nth girder of the first plurality of girders either along the first rooftop transportation pathway formed by the (n-1) girders of the first plurality of girders previously positioned or along the second rooftop transportation pathway formed by the (n-1) girders of the second plurality of girders previously positioned, positioning the nth girder at its use position and having the vehicle(s) return to the first extremity of the portion of the transportation structure along the service pathway,
   o (ii) starting from the first extremity, conveying with vehicle(s) the nth girder of the second plurality of girders either along the first rooftop transportation pathway or along the second rooftop transportation pathway, positioning the nth girder at its use position and having the vehicle(s) return to the first extremity of the portion of the transportation structure along the service pathway, and
   o (iii) starting from the first extremity, conveying with vehicle(s) the yth platform of the plurality of platforms either along the first rooftop transportation pathway or along the second rooftop transportation pathway, positioning the yth platform at its use position and having the vehicle(s) return to the first extremity of the portion of the transportation structure along the service pathway.

The method according to the invention may also have the optional features listed below, considered individually or in combination:
- method comprises, before step i), a step of erecting the piers,
- the method comprises, before step i), an additional step wherein a first section of the portion of the transportation structure comprising at least a pier, a girder from the first plurality of girders, a girder from the second plurality of girders and at least a platform is erected at a stocking site,
- in steps i) and ii), the vehicles are set up with the girders and the platform at the first extremity of the portion of the transportation structure,
- the girders are positioned with a girder launcher crane supported by the structure itself,
- the girders are manufactured at a stocking site.

A second subject of the invention consists of a portion of a transportation structure for pods travelling substantially free of air friction in an assembly of tube segments placed under low air pressure, the portion of the transportation infrastructure comprising:
- a plurality of piers substantially regularly spaced along the longitudinal axis X of the portion of transportation structure,
- a plurality of platforms connected to the piers and forming a service pathway running from a first extremity of the portion of the transportation structure to a second one,
- a first plurality of girders positioned on at least some of the piers and forming:
   o a first assembly of tube segments, the first assembly being capable of being placed under low air pressure and capable of allowing the circulation of pods travelling substantially free of air friction in the tube segments,
   o a first rooftop transportation pathway running from the first extremity of the portion of the transportation structure to the second one,
   each girder of the first plurality of girders comprising:
   o a tube segment of the first assembly of tube segments,
   o a metallic structure embedding the tube segment of the first assembly of tube segments, the upper surface of the metallic structure being a portion of the first rooftop transportation pathway,
- a second plurality of girders positioned on at least some of the piers and forming:
   o a second assembly of tube segments, the second assembly being capable of being placed under low air pressure and capable of allowing the circulation of pods travelling substantially free of air friction in the tube segments,
   o a second rooftop transportation pathway running from the first extremity of the portion of the transportation structure to the second one, alongside the first rooftop transportation pathway,
   each girder of the second plurality of girders comprising:
   o a tube segment of the second assembly of tube segments,
   o a metallic structure embedding the tube segment of the second assembly of tube segments, the upper surface of the metallic structure being a portion of the second rooftop transportation pathway.

The portion of transportation structure according to the invention may also have the optional features listed below, considered individually or in combination:
- all the girders of the first plurality of girders are positioned successively and continuously one after the other along the longitudinal axis X of the portion of the transportation structure and all the girders of the second plurality of girders are positioned successively and continuously one after the other along the longitudinal axis X of the portion of the transportation structure,
- the metallic structure comprises a lower deck, an upper deck and transverse reinforcements connecting the lower deck to the upper deck,
- each transverse reinforcement extends substantially in a plane perpendicular to the longitudinal axis X of the portion of transportation structure,
- each transverse reinforcement extends horizontally so as to match the contour of the cross-section of the tube segment,
- the upper deck is a substantially flat surface suitable for vehicle traffic,
- the metallic structure comprises transverse reinforcements and longitudinal reinforcements connecting the transverse reinforcements,
- each girder extends from one pier to the adjacent one,
- The portion of transportation structure further comprises a third plurality of girders positioned on the first plurality of girders and/or a fourth plurality of girders positioned on the second plurality of girders.

As it is apparent, the invention is based on the construction of a structure composed of piers, platforms and girders comprising tube elements of the high-speed transportation system and which can withstand the transportation of heavy parts like girders and platforms. The structure comprises a circulation loop so that, starting from a stocking site, vehicles circulating on the portion of the structure already in place can transport each additional element of the transportation structure to its position at the construction site and return to the stocking site without preventing other vehicles from transporting the next elements to the construction site. The transportation structure can thus be easily constructed whatever the terrain.

Other characteristics and advantages of the invention will be described in greater detail in the following description.

The invention will be better understood by reading the following description, which is provided purely for purposes of explanation and is in no way intended to be restrictive, with reference to:
- Figure 1, which is a view of a portion of transportation structure according to a first variant of the invention,
- Figure 2, which is a longitudinal cut of the portion of transportation structure of Figure 1,
- Figure 3 which is detailed view of a girder according to one variant,
- Figure 4, which is a view of a portion of transportation structure according to a second variant of the invention,
- Figure 5, which illustrates the erection of the piers of a portion of transportation structure,
- Figure 6, which illustrates the erection of a first section of a portion of transportation structure according to the second variant of the invention,
- Figure 7, which illustrates loading girders at the stocking site on vehicles positioned on a first section of a portion of transportation structure according to the second variant of the invention,
- Figure 8, which illustrates conveying platforms to the construction site along one of the rooftop transportation pathways of the portion of transportation structure according to the second variant of the invention,
- Figure 9, which illustrates conveying girders to the construction site along one of the rooftop transportation pathways of the portion of transportation structure according to the second variant of the invention,
- Figure 10, which illustrates positioning girders at the construction site,
- Figure 11, which illustrates vehicles returning to the stocking site.

It should be noted that spatially relative terms such as "lower", "beneath", "inward", "inwards", "outward", "outwards"... as used in this application refer to the positions and orientations of the different elements of the portion of transportation structure once the latter has been erected. "Upstream" and "downstream" as used in this application refer to the direction of assembling when starting from a stocking site.

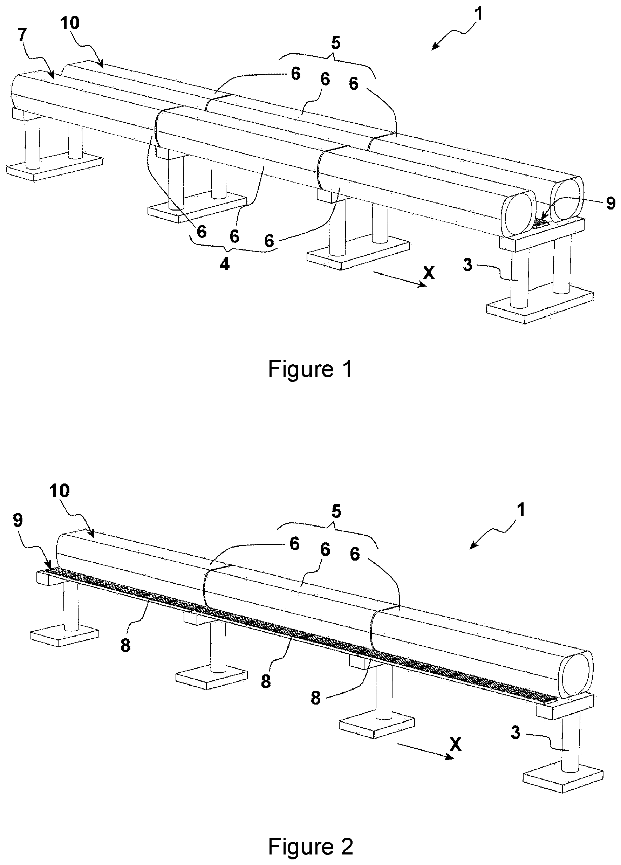

With reference to Figures 1 to 4, the portion of transportation structure 1 according to the invention first comprises a plurality of piers 3, a first plurality 4 of girders 6 positioned on at least a part of the piers (i.e. on at least some of the piers) and forming a first rooftop transportation pathway 7 running from the first extremity of the portion of the transportation structure to the second one, a second plurality 5 of girders 6 positioned on at least a part of the piers (i.e. on at least some of the piers) and forming a second rooftop transportation pathway 10, running from the first extremity of the portion of the transportation structure to the second one, alongside the first rooftop transportation pathway 7 and a plurality of platforms 8, either positioned on the piers or connected to the girders, and forming a service pathway 9 running from the first extremity of the portion of the transportation structure to the second one.

A portion of transportation structure is composed of a plurality of sections, preferably at least 3 sections. A section is defined by the length of a girder. It preferably matches the distance between two consecutive piers along the longitudinal axis X of the portion of the transportation structure.

A pier 3 is an upright support for a structure or superstructure such as an arch or bridge. It supports the superstructure and transfers loads of the superstructure to the foundations. The shape of the piers according to the invention is not particularly limited as long as they can support the girders and the platforms.

According to a first variant illustrated on Figure 1, the piers are pile bent piers, i.e. piers made of two or more columns supporting a pier cap. The piers substantially extend in a plan perpendicular to the route, i.e. perpendicular to the girders' length.

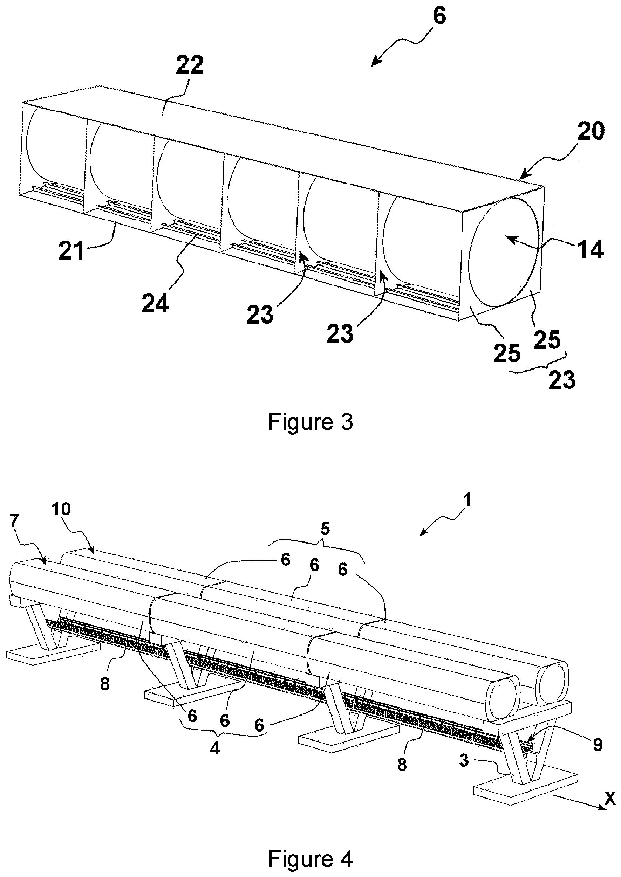

According to a second variant illustrated on Figure 4, the piers are V-shaped. The V substantially extends in a plan perpendicular to the route, i.e. perpendicular to the girders' length. The piers comprise two inclined arms, extending outwards. Each arm can support one girder. The piers according to this second variant can also comprise a pier cap, in the form of a horizontal beam linking the two arms. This pier cap provides additional seating for the girders and better distributes the load from the girders to the piers.

Optionally, the plurality of piers can be divided into a first plurality of piers and a second plurality of piers. The first plurality of piers supports the first plurality of girders and the second plurality of piers supports the second plurality of girders. The advantage of this design is that the space between the first and second rooftop transportation pathways and/or the level of the first and second rooftop transportation pathways can be easily adjusted to the topography of land.

Others shapes such as Y, X, H, hammerhead piers, cantilevered piers, trestle piers, solid piers, simple columns are also possible.

The piers are substantially regularly spaced along the longitudinal axis X of the portion of the transportation structure.

The portion 1 of transportation structure according to the invention further comprises a plurality of platforms 8 positioned along the longitudinal axis X and forming a service pathway 9 running from a first extremity of the portion of the transportation structure to a second one. By service pathway, it is meant at least one continuous track designed to withstand vehicle traffic. In particular, it is not designed to withstand the transportation of heavy parts like girders and platforms. The service pathway extends from the first longitudinal extremity of the portion of transportation structure to the second longitudinal extremity of the portion of transportation structure, whatever the length of the portion. For the sake of clarity, the service pathway is above ground. It runs substantially parallel to the first rooftop transportation pathway and optionally parallel to the second rooftop transportation pathway.

A platform is a light structure suitable for vehicle traffic. The platforms are preferably made of steel. They preferably comprise a traffic deck, i.e. a surface suitable for vehicle traffic, possibly reinforced underneath by longitudinal reinforcements and/or transversal reinforcements. These reinforcements add structural rigidity to the traffic deck. The traffic deck can also comprise safety rails along the longitudinal edges of the traffic deck for safety reasons. The traffic deck, the reinforcements and the safety rails are preferably made of steel. The traffic deck is preferably a perforated surface, like a perforated steel sheet or metal grid.

There are different ways to link the platforms 8 to the rest of the structure. According to a first variant of the platform positioning, illustrated on Figures 1 and 4, the platforms 8 are supported by the piers 3. Preferably, the longitudinal ends of the platforms are supported by the piers. In that case, the platforms have preferably the same length as the girders.

Consequently, the piers can comprise a bearing area 19, which can be for example a portion of the shape itself of the piers or an anchor point added to the pier. In a case not illustrated, the piers comprise anchor points so that the platforms of the service pathway can be anchored to the piers. In the case illustrated on Figure 1, the bearing area 19 is the central part of the pier cap. In that case, the platforms of the service pathway, in particular their longitudinal ends, can simply rest on the pier caps. In the case illustrated on Figure 4, the bearing area 19 is in the form of a protrusion extending inwards from an arm of the V-shaped pier. In that case, the platforms of the service pathway, in particular their longitudinal ends, can simply rest on the protrusions. Preferably, the two arms comprise a bearing area. More preferably, the bearing areas of the two arms of a given pier are substantially flush, i.e. at the same level, so that the platforms of the service pathway can more stably rest on the bearing areas. Alternatively, the platforms of the service pathway can rest on other parts of the pier, such as the horizontal beam of a H-shaped pier if applicable, or can be anchored to a column.

For this first variant of the platform positioning, the service pathway 9 can run in-between the girders 6 of the first plurality 4 of girders and the girders 6 of the second plurality 5 of girders. In particular on Figure 4, a platform is positioned transversally between a girder of the first plurality and a girder of the second plurality and vertically below these two girders. This position is very convenient for the circulation of vehicles on the structure during the construction phase as it will be further detailed when describing the erection method. Other positions of the service pathway are of course possible depending on the design of the piers and the position of the bearing areas.

According to a second variant of the platform positioning (not illustrated), the platforms are supported by the girders. In that case, the platforms can have the same length as the girders or can be of shorter length, preferably so that the platform's length is a divisor of the girder's length. Preferably, the platforms are positioned in-between the girders 6 of the first plurality 4 and the girders 6 of the second plurality 5. More preferably, the first longitudinal edge of the platforms rests on the inward side of a girder from the first plurality and the second longitudinal edge of the platforms rests on the inward side of a girder from the second plurality. Consequently, the girders can comprise a bearing area 19, which can be for example a portion of the shape itself of the girders or an anchor point added to the girders.

Thanks to the service pathway 9, during the construction phase, the vehicles having moved an element to the construction site can return to the stocking site without preventing other vehicles from transporting the next elements to the construction site. It speeds up the transportation of the elements to the construction site and thus shortens the erection phase. This advantage will be further detailed when describing the erection method. During operation, the service pathway can be advantageously used for maintenance, inspection and/or as an escape route. The service pathway can be permanent or temporary.

The portion 1 of transportation structure according to the invention also comprises a first plurality 4 of girders 6 positioned on at least some of the piers 3 and forming:
- a first assembly 12 of tube segments 14, the first assembly being capable of being placed under low air pressure and capable of allowing the circulation of pods travelling substantially free of air friction in the tube segments, and
- a first rooftop transportation pathway 7 running from the first extremity of the portion of the transportation structure to the second one.

Accordingly, each girder 6 of the first plurality comprises:
o a tube segment 14 of the first assembly of tube segments,
o a metallic structure 20 embedding the tube segment of the first assembly of tube segments, the upper surface of the metallic structure being a portion of the first rooftop transportation pathway.

A girder 6 is a support beam used in construction. It can be made of steel or concrete or it can be a composite structure. It can be a box girder, i.e. a girder that has a cross-sectional closed contour.

The design of the tube segments 14 is not limited as long as they can be connected to one another, by their longitudinal ends, directly or indirectly, along the longitudinal axis so as to form an assembly as described above. In particular, the cross-section of the tube is not limited. It can notably be a circular cross-section or a polygonal cross-section.

The tube segments are preferably made of steel. Steel has the advantages of being light, easily vacuum-tight and recyclable.

According to one variant of the invention, the tube segment is made of steel plates welded to one another.

According to another variant, the tube segment comprises a plurality of wall segments connected together by their longitudinal edges. Adjacent wall segments are arranged edge to edge along a junction line. Their edges can comprise flanges to ease the assembling. Each wall segment can comprise at least one central panel and two side panels. The side panels extend on both sides of the central panel over the circumference of the tube segment. They laterally enclose the central panel. The side panels form an angle with the central panel(s). This type of wall segment has the advantage of being easily obtained by simple folding of a metal sheet. The side panels stiffen the wall segments and increase the bending strength of said segments in the longitudinal direction.

According to another variant, the tube segment is a double-walled tube segment wherein the space between the exterior tube and the interior tube is filled with a stiffening compound.

According to another variant, the tube segment comprises a plurality of longitudinal stringers mounted to a plurality of circumferential sections to form a skeletal framework, on which skin sections are attached air-tightly.

According to another variant, the tube segment comprises a plurality of elongated outer skin panels forming the outer wall of a double-walled tube segment. The panels are curved so that their assembling form a smooth cylindrical surface. They can have embossed indentation to increase buckling resistance. The tube segment also comprises inner sheet parts, forming the inner wall of the double-walled tube segment, welded to each other to obtain a an airtight connection and welded to the elongated outer skin panels.

According to another variant, the tube segment comprises elongated curved outer shell parts forming the outer wall of a double-walled tube segment, an inner wall in the form of a regular N-facetted polygonal tube, and interlayer shell parts whose inward side is flat and whose outward side has the same curvature as the elongated curved outer shell parts.

By "low air pressure", it is meant an air pressure below atmospheric pressure, preferably below or equal to 10 kPa, more preferably between 10 Pa and 10 kPa.

Practically speaking, the capability of the assembly to be placed under low air pressure is conferred by the features of the tube segment wall, the features of the connection between tube segments and the pumping equipment. In particular, the tube segment wall has to be airtight. Different ways of making a tube wall airtight are well known and the person skilled in the art will know how to select the features of the wall in each specific case. Also, the connection between two tube segments has to be airtight. The airtightness of the connection can notably be provided by welding, by the addition of components such as an elastomer between tube segments that are bolted or clamped, or by means of an expansion joint. The person skilled in the art knows how to make connections airtight and will adapt the connection to each specific case. Also, the pumping equipment has to be correctly dimensioned so that a low air pressure can be reached and maintained in the assembly of tube segments, while taking into account the air leakages under operation. The person skilled in the art knows how to do so and will adapt the pumping equipment to each specific case.

Practically speaking, the capability of the assembly to allow the circulation of pods travelling substantially free of air friction in the tube segments is conferred by the infrastructure positioned inside the tube segments and which provide notably the levitation/suspension, propulsion, braking... Such infrastructures are already well known and the person skilled in the art will know how to adapt the infrastructure to each specific case.

The girder further comprises a metallic structure 20 embedding the tube segment of the first assembly of tube segments, the upper surface of the metallic structure being a portion of the first rooftop transportation pathway 7.

In a first variant of the metallic structure illustrated on Figure 3, the metallic structure can comprise a lower deck 21, an upper deck 22 and transverse reinforcements 23 connecting the lower deck to the upper deck.

The lower deck 21 is substantially a flat part extending horizontally. It is preferably made of plates, such as steel plates. It is more preferably reinforced with longitudinal stiffeners 24. The lower deck increases the rigidity of the girder and limits the deflection of the girder between its supports.

The upper deck 22 can be a flat part extending horizontally. It is preferably made of plates, such as steel plates. It is more preferably reinforced with longitudinal stiffeners. The upper deck increases the rigidity of the girder and limits the deflection of the girder between its supports. The upper surface of the upper deck forms a portion of the first rooftop transportation pathway 7.

The transverse reinforcements 23 extend substantially in a plane perpendicular to the longitudinal axis X of the portion of transportation structure. They extend horizontally to delimit the width of the girder and to stiffen the lower deck and the upper deck they are connected to. They extend vertically to delimit the thickness of the girder and to further stiffen the girder. In particular, they extend to the level of or above the top of the tube segment so that they can be connected directly to the upper deck. In particular, they extend to the level of or below the bottom of the tube segment so that they can be connected directly to the lower deck. They are preferably spaced along the length of the girder, i.e. along the longitudinal axis X. More preferably, they are regularly spaced. They can be made of, for example, flat panels, corrugated panels or flat panels reinforced with stiffeners.

According to the first variant of the metallic structure illustrated on Figure 3, a transverse reinforcement 23 extends horizontally so as to match the contour of the cross-section of the tube segment. It further stiffens the tube segment and the girder. The transverse reinforcement preferably comprises two transverse reinforcement sections 25, one on each side of the tube segment. In particular, a transverse reinforcement section positioned on one side of the tube segment faces the transverse reinforcement section positioned on the other side of the tube segment.

Alternatively, a transverse reinforcement can comprise a lower horizontal beam positioned below the tube segment, an upper horizontal beam positioned above the tube segment and at least one vertical beam connected to the lower and upper horizontal beams. The transverse reinforcement preferably comprises two vertical beams positioned on each side of the tube segment, connected to the lower and upper horizontal beams so as to form a square cross-section embedding the tube segment.

According to a second variant of the metallic structure (not illustrated), the metallic structure embedding the tube segment can comprise transverse reinforcements and longitudinal reinforcements connecting the transverse reinforcements. The transverse reinforcements can be as described above. The longitudinal reinforcements are preferably beams, in particular I-beams. The longitudinal reinforcements can be positioned below the transverse reinforcements, as lower longitudinal reinforcements and/or above the transverse reinforcements, as upper longitudinal reinforcements. The girder preferably comprises two pluralities of longitudinal reinforcements, one on each side of the tube segment.

In this variant, the upper surface of the upper longitudinal reinforcements forms a portion of the first rooftop transportation pathway. In particular, the upper surfaces comprise rails forming a railroad, so that railway vehicles can move along the railroad.

Each metallic structure 20 of a girder embeds one single tube segment. In other words, a girder does not comprise a tube segment 14 of a second assembly of tube segments, positioned adjacent to the tube segment 14 of the first assembly 12 in the metallic structure.

Preferably each girder 6 extends from one pier to the adjacent one. In particular the first end of the girder rests on a given pier and the second end of the girder rests on an adjacent pier along the longitudinal axis X of the portion of the transportation route or structure. The girders can thus be easily installed by simply positioning them on the piers. Alternatively, a girder can extend on more than two piers.

The first plurality 4 of girders 6 is positioned along the longitudinal axis of the portion of the transportation route or structure, so as to form a first rooftop transportation pathway 7. In particular, all the girders 6 of the first plurality 4 of girders are positioned successively and continuously one after the other along the longitudinal axis X of the portion of the transportation structure, so as to form a first rooftop transportation pathway 7. By rooftop transportation pathway, it is meant at least one continuous track, on the girders, designed to withstand the transportation of heavy parts like girders and platforms with vehicles. The rooftop transportation pathway extends from the first longitudinal extremity of the portion of the transportation structure to the second longitudinal extremity of the portion of the transportation structure, whatever the length of the portion.

According to one variant of the rooftop transportation pathway, the upper surface of the girder, in particular of the upper deck, is simply a substantially flat surface suitable for vehicle traffic.

According to another variant of the rooftop transportation pathway, the upper surface of the girder, in particular of the upper deck, comprises rails forming a railroad, so that railway vehicles can move along the railroad.

The portion 1 of transportation structure according to the invention further comprises a second plurality 5 of girders 6 positioned on at least some of the piers and forming:
- a second assembly 13 of tube segments 14, the second assembly being capable of being placed under low air pressure and capable of allowing the circulation of pods travelling substantially free of air friction in the tube segments, and
- a second rooftop transportation pathway 10 running from the first extremity of the portion of the transportation structure to the second one, alongside the first rooftop transportation pathway.

Accordingly, each girder 6 of the second plurality 5 comprises:
o a tube segment 14 of the second assembly of tube segments,
o a metallic structure 20, i.e. a second metallic structure, embedding the tube segment of the second assembly of tube segments, the upper surface of the metallic structure being a portion of the second rooftop transportation pathway.

The characteristics and variants of the tube segments of the first assembly detailed above also apply to the tube segments of the second assembly. Tube segments of the first assembly and tube segments of the second assembly can be identical to ease logistics. The characteristics and variants of the metallic structure described above also apply here. The definition and variants detailed in relation to the first plurality of girders apply to the second plurality of girders. Girders of the first plurality and girders of the second plurality can be identical to ease logistics. The definition and variants detailed in relation to the first rooftop transportation pathway apply to the second rooftop transportation pathway.

The second rooftop transportation pathway 10 runs alongside the first rooftop transportation pathway 7. By alongside, it is meant that both rooftop transportation pathways are substantially parallel to each other and run adjacent to each other. It is not limited to rooftop transportation pathways at the same level and/or rigorously parallel. The space between the first and second rooftop transportation pathways and/or the level of the first and second rooftop transportation pathways can be adjusted to the topography of land. For the sake of clarity, the first and second rooftop transportation pathways are physically separated from one another. There are not two portions of one pathway formed by the upper surface of one plurality of girders.

The first plurality 4, respectively second plurality 5, of girders 6 can be positioned on all the piers as illustrated in the variants of Figures 1 to 4. Generally speaking, the first plurality 4, respectively second plurality 5, of girders 6 is positioned on all the piers when each pier extends transversely enough to support both the first plurality of girders and the second plurality of girders. Alternatively, the first plurality 4, respectively second plurality 5, of girders 6 is positioned only on a part of the piers, as in the case for example of piers in the form of columns where half of the piers support the first plurality of girders and half of the piers support the second plurality of girders.

Optionally, bearings are positioned between the piers and the girders. A bearing is a device which supports the girders and transfer loads and movements from the girders and superstructure to the substructure and foundation. The bearings permit controlled movement and decrease the stress involved.

Thanks to the first plurality 4 of girders and to the second plurality 5 of girders 6, during the construction phase, vehicles circulating on the first and/or second rooftop transportation pathways formed by the girders already in place can easily transport each additional element of the portion of transportation structure to its position. Access to the ground along the construction route is not necessary anymore. This advantage will be further detailed when describing the erection method.

According to one variant, the portion of transportation structure further comprises a third plurality of girders 6 positioned on the first plurality 4 of girders and/or a fourth plurality of girders 6 positioned on the second plurality 5 of girders. In particular each girder of the third plurality is positioned on a girder of the first plurality and/or each girder of the fourth plurality is positioned on a girder of the second plurality. This positioning limits the footprint of the transportation structure. It also reduces the amount of switches and facilitates surface use, in particular for deviating towards stations.

The characteristics and variants of the girders of the first and second pluralities detailed above also apply to the girders of the third and fourth pluralities. Girders of all pluralities can be identical to ease logistics.

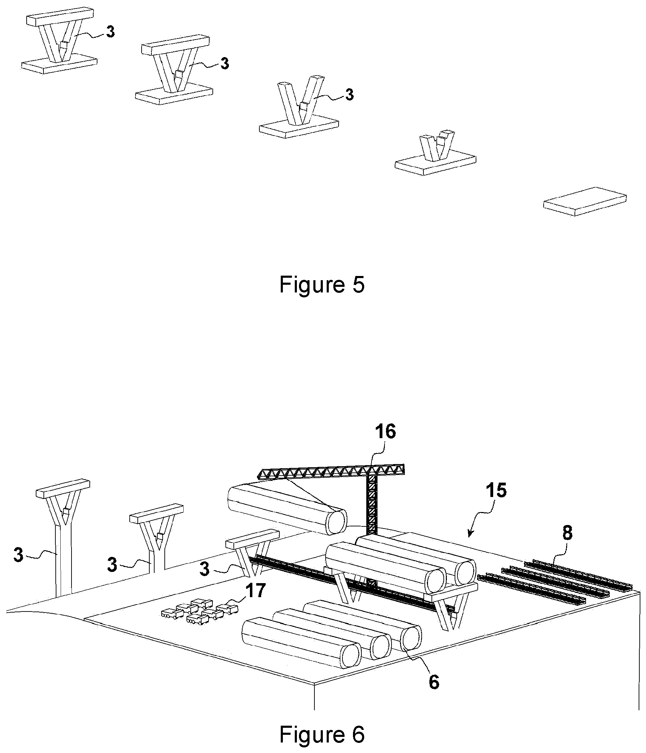

With reference to Figures 5 to 11, the method for erecting the portion 1 of the transportation structure according to the invention will now be described.

In a first step, illustrated on Figure 5, the piers 3 of the portion 1 of the transportation structure are erected. They can be erected with any suitable method, such as panel formwork for example. Their erecting method includes the erection of piers foundations as required by the nature of the ground. This step can be done before the step of positioning the girders 6 or at least partially at the same time as the step of positioning the girders. In other words, the piers can be erected well before the girder positioning starts, for example weeks before. This notably gives time for concrete drying and soil compaction. Alternatively, some piers are still being erected when the girder positioning starts on the first erected piers.

As the footprint for erecting piers is limited and only light-duty vehicles are needed (bulldozers, concrete mixer trucks), the piers are preferably erected by ground access to the construction site of each pier.

In a second step of erecting the portion 1 of the transportation structure, the girders 6 and platforms 8 are erected.

As mentioned above, the erection of girders and platforms starts from a stocking site 15 where at least part of the elements of the transportation structure are stocked. Depending on the ease of transporting the elements up to the stocking site, some elements can be manufactured at the stocking site in manufacturing facilities. It can for example be the case of the tube segments, of the metallic structures or of the girders which are massive pieces. Manufacturing some elements on the stocking site minimizes the erection time at the construction site and it allows for better quality control of the manufactured elements.

The stocking site 15 is preferably located at the future site of a station, in particular a passenger and/or freight station. This limits the footprint of the construction phase. It also limits the civil work. In particular, the civil work done to build the stocking site and its optional manufacturing facilities can be used for erecting the station. The stocking site is preferably located at the ground level.

As illustrated on Figure 6, the first sub-step in erecting the girders 6 and platforms 8 is at the stocking site 15. This sub-step comprises the erection, at the stocking site, of a first section of the structure comprising at least one pier 3, a girder 6 from the first plurality of girders, a girder 6 from the second plurality of girders and at least a platform 8. In particular, this sub-step comprises positioning a girder from the first plurality of girders on at least one pier and positioning a girder from the second plurality of girders on at least one pier. More particularly, the girder of the first plurality and the girder of the second plurality are positioned on the same at least one pier. This positioning is preferably done with a crane 16 which can pick the elements on the stocking site and move them to the piers. The assembling order of the girder(s) and platform(s) can vary depending on the design of the structure and notably depending on how the platform is linked to the rest of the structure.

According to a first variant, the first section of structure comprises one single pier. This is notably the case when the stocking site is positioned on a high ground. The first extremity of the first girder of the first plurality of girders can then rest on the high ground while its second extremity can rest on the pier positioned downhill. Similarly, the first extremity of the first girder of the second plurality of girders can rest on the high ground while its second extremity can rest on the pier positioned downhill. In that case, the first sub-step comprises positioning a girder from the first plurality of girders between the high ground and the pier and positioning a girder from the second plurality of girders between the high ground and the pier.

According to a second variant illustrated on Figure 6, the first section of structure comprises two piers. This is notably the case when the stocking site is positioned on a substantially flat ground. The first extremity of the first girder of the first plurality of girders can then rest on the first pier while its second extremity can rest on the second pier. Similarly, the first extremity of the first girder of the second plurality of girders can rest on the first pier while its second extremity can rest on the second pier. In that case, the first sub-step comprises positioning a girder from the first plurality of girders on the two piers and positioning a girder from the second plurality of girders on the two piers.

This first sub-step can comprise the erection, at the stocking site, of other sections of the structure. The number of sections erected at the stocking site is conditioned by the ability of the crane from the stocking site to position the elements on the piers.

Once the first section of the structure has been erected, it comprises a first extremity adjacent to the stocking site and a second extremity at its opposite end. The first extremity of the first section corresponds to the first extremity of the portion of transportation structure erected according to the invention. Consequently, the position of the first extremity of the portion of transportation structure erected according to the invention will not change over time during the erection of the portion of transportation structure. As for the second extremity of the first section, it corresponds to the second extremity of the structure under construction, as long as no other section of structure has been erected downstream of the first section. In other words, the position of the second extremity of the structure under construction will change over time each time a new section is erected downstream of the already erected sections of transportation structure.

Thanks to the elements composing the erected structure, vehicles 17 can circulate on the first rooftop transportation pathway 7 formed by at least one girder 6 of the first plurality 4 of girders, on the second rooftop transportation pathway 10 formed by at least one girder 6 of the second plurality 5 of girders and on the service pathway 9 formed by at least one platform 8. In particular, vehicles moving the elements to be positioned along the construction route can circulate on the first rooftop transportation pathway and/or the second rooftop transportation pathway, starting from the first extremity and up to the second extremity of the structure under construction. Once the elements have reached their use position, the vehicles can return to the first extremity via the service pathway.

Consequently, in a second sub-step in erecting the girders 6 and platforms 8, another section of the structure can be erected as detailed hereafter. This section is referred to below as "the second section" for simplicity, assuming that only a first section has been erected at the stocking site.

The second section of the structure comprises one girder 6 of the first plurality 4 of girders, one girder 6 of the second plurality 5 of girders, at least one platform 8 of the plurality of platforms and at least one pier 3 of the structure.

As explained above with regard to the pier erection, at least an additional pier has been erected downstream of the first section of the structure.

Vehicles 17 suitable for the transport of heavy elements are positioned on the first section of the structure, in particular on the first rooftop transportation pathway 7 and/or on the second rooftop transportation pathway 10, more particularly on the first girder 6 of the first plurality 4 of girders and/or on the first girder 6 of the second plurality 5 of girders. The vehicles can be lifted with a crane 16 or can reach their position with an access ramp or any other suitable equipment. The type of vehicles is not limited. It can be wheeled vehicles, such as trucks or train locomotives. Depending on the type of vehicles, the element(s) to be transported can be either loaded on one vehicle or loaded on several vehicles at the same time or the vehicle can be simply connected to the element(s), as in the case of a train locomotive for the transport of element(s) equipped of railroad wheels. In this description, the terms "set up" and "pair" are used to designate equally the loading of the vehicle(s) with an element and the connection of the vehicle(s) with an element. The term "freed" is used to designate equally the unloading of an element from the vehicle(s) and the disconnection of the vehicle(s) with an element.

Some vehicles are set up with the girder(s) and platform(s) of the second section of the structure. In particular, vehicle(s) are set up with one girder 6 of the first plurality 4 of girders, vehicle(s) are set up with one girder 6 of the second plurality 5 of girders and vehicle(s) are set up with at least one platform 8. The elements can be conveyed from the stocking site on the first section of the structure or can be lifted from the stocking site up to the first section of the structure with a crane. In the first case, they can be conveyed by the vehicles themselves. In the second case, the vehicles can be positioned and then set up.

The elements are then conveyed with the vehicles from the first extremity to the second extremity of the structure under construction, which is adjacent to their use position. In particular:
- The girder 6 of the first plurality 4 of girders is conveyed either along the first rooftop transportation pathway 7 formed by the girder(s) of the first plurality of girders already positioned or along the second rooftop transportation pathway 10 formed by the girder(s) of the second plurality of girders already positioned,
- The girder 6 of the second plurality 5 of girders is conveyed along either the first rooftop transportation pathway 7 or the second rooftop transportation pathway 10,
- The at least one platform 8 is conveyed along either the first rooftop transportation pathway 7 or the second rooftop transportation pathway 10.

The order in which the elements are paired with vehicles and conveyed to the second extremity is not limited. Also, some elements can be conveyed to the second extremity while others are still being set up on vehicles.

Once an element has been conveyed to the second extremity of the structure under construction, it is positioned at its use position, i.e. its position of service in the structure. In particular:
- The girder 6 of the first plurality 4 of girders is positioned downstream of the first rooftop transportation pathway 7. In particular, it is positioned after the girder of the first rooftop transportation pathway forming the second extremity of the structure under construction. More particularly, it is positioned in line with the girder 4 of the first rooftop transportation pathway 7 forming the second extremity along the longitudinal axis X. Even more particularly, it is positioned so that a first end of the girder rests on the pier forming the second extremity of the first section of structure and a second end of the girder rests on the at least one additional pier erected downstream of the first section of structure. The girder of the first plurality of girders is preferably positioned with a crane 18, more preferably with a girder launcher crane, supported by the structure itself.
- The girder 6 of the second plurality 5 of girders is further positioned downstream of the second rooftop transportation pathway 10. In particular, it is positioned after the girder of the second rooftop transportation pathway forming the second extremity of the structure under construction. More particularly, it is positioned in line, along the longitudinal axis, with the girder of the second rooftop transportation pathway forming the second extremity. Even more particularly, it is positioned so that a first end of the girder rests on the pier forming the second extremity of the first section of structure and a second end of the girder rests on the additional pier erected downstream of the first section of structure. The girder of the second plurality of girders is preferably positioned with the crane 18, more preferably with the girder launcher crane.
- The at least one platform 8 is positioned downstream of the service pathway 9. In particular, it is positioned after the platform of the service pathway forming the second extremity of the structure under construction. More particularly, it is positioned in line, along the longitudinal axis X, with the platform of the service pathway forming the second extremity. Even more particularly, it is positioned so that a first end of the platform rests on the pier forming the second extremity of the first section of structure and a second end of the platform rests on the additional pier erected downstream of the first section of structure. The at least one platform is preferably positioned with the crane, more preferably with the girder launcher crane.

The use of a crane 18 supported by the structure is beneficial. It further limits the footprint of the erection by eliminating the need for ground access to the construction site and ground preparation for a crane. It also makes the erecting method further independent of the topography and roughness of the terrain.

Once an element has been positioned, the corresponding freed vehicle(s) can return to the first extremity of the structure along the service pathway. In particular:
- The vehicle(s) 17 freed from the girder 6 of the first plurality 4 of girders is moved from either the first or second rooftop transportation pathway 7, 10 to the service pathway 9. In the case where the service pathway is not at the level of either the first or second rooftop transportation pathway, the vehicle(s) can be lifted by a crane and put down on the service pathway. Preferably it is lifted with the girder launcher crane.
- The vehicle(s) 17 freed from the girder 6 of the second plurality 5 of girders is moved from either the first or second rooftop transportation pathway 7, 10 to the service pathway 9. In the case where the service pathway is not at the level of either the first or second rooftop transportation pathway, the vehicle(s) can be lifted by a crane and put down on the service pathway. Preferably it is lifted with the girder launcher crane.
- The vehicle(s) 17 freed from the at least one platform 8 is moved from either the first or second rooftop transportation pathway 7, 10 to the service pathway 9. In the case where the service pathway is not at the level of either the first or second rooftop transportation pathway, the vehicle(s) can be lifted by a crane and put down on the service pathway. Preferably it is lifted with the girder launcher crane.

The order in which the elements are positioned is not limited. Also, some elements can be positioned while others are still being paired with vehicles or conveyed to the second extremity. Preferably, the at least one platform 8 is positioned first so that the vehicle(s) freed from the at least one girder 6 of the first plurality 4 of girders and/or of the at least one girder 6 of the second plurality 5 of girders, can be more easily transferred to the service pathway.

Once a second section of the structure has been erected as detailed above, other sections of the structure can be erected in sequence according to a similar process and as detailed below in relation to the erection of the xth section of the structure. By "in sequence", it is meant that each section of the structure is erected one after the other, by repeatedly conveying and positioning one girder of the first plurality, one girder of the second plurality and at least one platform. The order in which the girder of the first plurality, the girder of the second plurality and the at least one platform of one section are conveyed and positioned is not limited.

The xth section of the structure comprises the nth girder 6 of the first plurality 4 of girders, the nth girder 6 of the second plurality 5 of girders, at least the yth platform 8 of the plurality of platforms and at least the zth pier 3 of the structure. By default, x, y, z and n are different. In case where each section of the structure comprises one single platform, x is equal to n and y. In that case, the nth girder of the first plurality of girders is also the xth, the nth girder of the second plurality of girders is also the xth and the yth platform of the plurality of platforms is also the xth. In case where the first section comprises 2 piers and each section of the structure other than the first one comprises one single pier, z is equal to n+1.

At least the zth pier 3 has first been erected downstream of the (x-1) first sections.

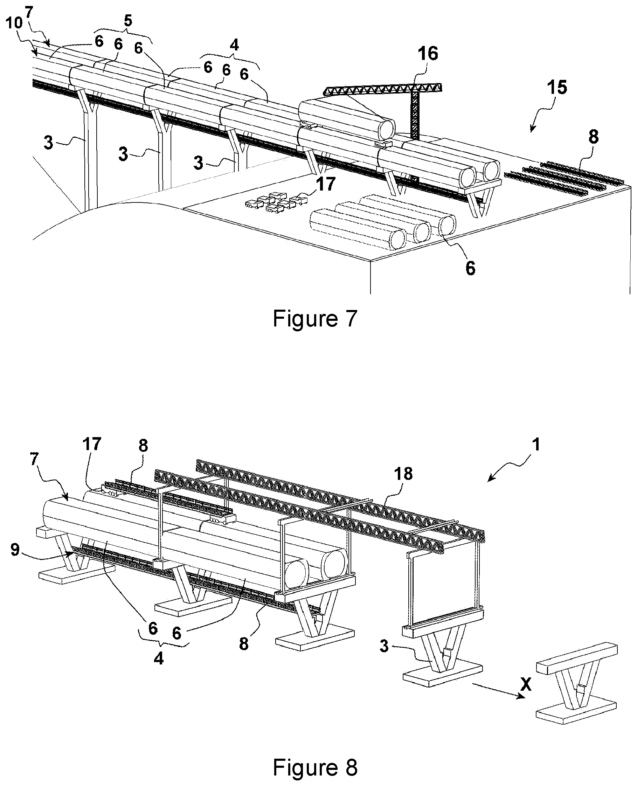

As illustrated on Figure 7, the vehicles 17 which have returned to the first extremity of the structure after being freed from the girder(s) and platform(s) of a previous section(s) of the structure are set up with the girder(s) and platform(s) of the xth section of the structure. In particular, vehicle(s) are set up with at least the nth girder of the first plurality of girders, vehicle(s) are set up with the nth girder of the second plurality of girders and vehicle(s) are set up with the yth platform of the plurality of platforms. If the xth section comprises additional platform(s), they are paired with the vehicles similarly.

As illustrated on Figures 8 and 9, starting from the first extremity of the structure, the girder(s) 6 and platform(s) 8 of the xth section of the structure are conveyed with vehicles from the first extremity to the second extremity of the structure under construction, which is adjacent to their use position. In particular:
- The nth girder 6 of the first plurality 4 of girders is conveyed either along the first rooftop transportation pathway 7 formed by the (n-1) girders of the first plurality of girders previously positioned or along the second rooftop transportation pathway 10 formed by the (n-1) girders of the second plurality of girders previously positioned,
- The nth girder 6 of the second plurality 5 of girders is conveyed along either the first rooftop transportation pathway 7 or the second rooftop transportation pathway 10,
- The yth platform 8 of the plurality of platforms is conveyed along either the first rooftop transportation pathway 7 or the second rooftop transportation pathway 10.

If the xth section comprises additional platform(s), they are conveyed similarly. The order in which the elements are paired with vehicles and conveyed to the second extremity is not limited. Also, some elements can be conveyed to the second extremity while others are still being paired with vehicles.

According to one variant, the nth girder of the first plurality 4 of girders is conveyed along the first rooftop transportation pathway 7 while the nth girder 6 of the second plurality 5 of girders is conveyed along the second rooftop transportation pathway 10. It further speeds up the erecting process and limit the move of girders at their use position. According to another variant, the nth girder of the first plurality 4 of girders, the nth girder 6 of the second plurality 5 of girders and the yth platform are conveyed along the same rooftop transportation pathway. It can notably be the case when one of the rooftop transportation pathways is used to stock elements, such as girders.

As illustrated on Figures 9 and 10, once an element has been conveyed to the second extremity of the structure under construction, it is positioned at its use position. In particular:
- The nth girder 6 of the first plurality of girders is positioned downstream of the first rooftop transportation pathway 7. In particular, it is positioned after the girder of the first rooftop transportation pathway forming the second extremity of the structure under construction. More particularly, it is positioned in line, along the longitudinal axis, with the (n-1)th girder of the first rooftop transportation pathway. Even more particularly, it is positioned so that a first end of the nth girder rests on the pier forming the second extremity (the (z-1)th pier) and a second end of the nth girder rests on the zth pier erected downstream of the structure. The nth girder of the first plurality of girders is preferably positioned with a crane 18, more preferably with a girder launcher crane, supported by the structure itself,
- The nth girder 6 of the second plurality 5 of girders is further positioned downstream of the second rooftop transportation pathway 10. In particular, it is positioned after the girder of the second rooftop transportation pathway forming the second extremity of the structure under construction. More particularly, it is positioned in line, along the longitudinal axis, with the (n-1)th girder of the second rooftop transportation pathway. Even more particularly, it is positioned so that a first end of the nth girder rests on the pier forming the second extremity (the (z-1)th pier) and a second end of the nth girder rests on the zth pier erected downstream of the structure. In other words, it is positioned alongside the nth girder of the first plurality. The nth girder of the second plurality of girders is preferably positioned with the crane 18, more preferably with the girder launcher crane,
- The yth platform 8 is positioned downstream of the service pathway. In particular, it is positioned after the (y-1)th platform of the service pathway, i.e. the platform of the service pathway forming the second extremity of the structure under construction. More particularly, it is positioned in line, along the longitudinal axis, with the platform of the service pathway forming the second extremity. Even more particularly, it is positioned so that a first end of the yth platform rests on the pier forming the second extremity (the (z-1)th pier) and a second end of the yth platform rests on the zth pier erected downstream of the structure. The yth platform is preferably positioned with a crane 18, more preferably with a girder launcher crane, supported by the structure itself.

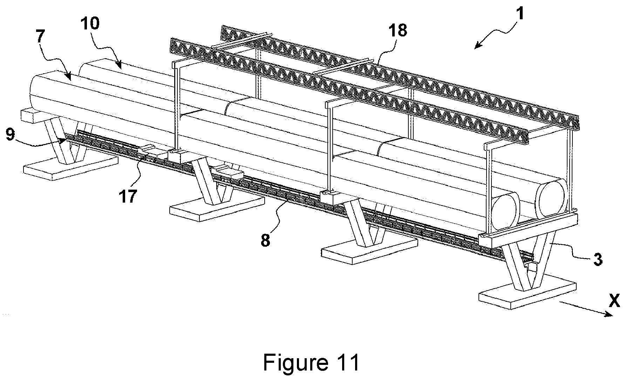

As illustrated on Figures 10 and 11, once an element of the xth section of structure has been positioned, the corresponding freed vehicle(s) can return to the first extremity of the structure along the service pathway. In particular:
- The vehicle(s) freed from the nth girder of the first plurality of girders is moved from either the first or second rooftop transportation pathway 7, 10 to the service pathway 9,
- The vehicle(s) freed from the nth girder of the second plurality of girders is moved from either the first or second rooftop transportation pathway 7, 10 to the service pathway 9,
- The vehicle(s) freed from the nth platform is moved from either the first or second rooftop transportation pathway 7, 10 to the service pathway 9.

In the case where the service pathway is not at the level of either the first or second rooftop transportation pathway, the vehicle(s) can be lifted by a crane and put down on the service pathway. Preferably it is lifted with the girder launcher crane.

If the xth section comprises additional platform(s), they are positioned similarly and the corresponding vehicles return to the first extremity similarly. The order in which the elements of the xth section are positioned is not limited. In the case where the nth girder of the first plurality 4 of girders, the nth girder 6 of the second plurality 5 of girders and the yth platform are conveyed along the same rooftop transportation pathway, the girders are positioned alternately downstream of the first rooftop transportation pathway 7 and downstream of the second rooftop transportation pathway 10, preferably with the help of the girder launcher crane. Also, some elements of the xth section can be positioned while other elements of the xth section or of subsequent sections are being paired with vehicles or conveyed to the second extremity. Preferably, the yth platform 8 is positioned first so that the vehicle(s) conveying the nth girder of the first plurality of girders and the nth girder of the second plurality of girders can be more easily transferred from either the first or second rooftop transportation pathway to the service pathway.

At the end of the step of erecting the structure, the last girder of the first plurality of girders and the last girder of the second plurality of girder are positioned on the last piers of the structure. These piers can be adjacent to or shared with a second portion of transportation structure erected or being erected as an extension of the relevant portion of transportation structure along the longitudinal axis of the transportation route. This second portion of transportation structure is erected from a second stocking site, possibly at the future site of a station, located downstream of the relevant portion. This second portion of transportation structure is built by erecting its structure backwards of the erection of the structure of the relevant portion. In other words, each portion is built from a stocking site in direction of another stocking site and at some point, the two portions join. The last girder of the first plurality of girders of the relevant portion is thus adjacent to the last girder of the first plurality of the second portion so that there is a continuity in the first assembly 12 of tube segments 14. Similarly, the last girder of the second plurality of girders of the relevant portion is adjacent to the last girder of the second plurality of the second portion so that there is a continuity in the second assembly 13 of tube segments 14.

Once all the sections of the portion of the transportation structure have been assembled in sequence, an optional third plurality 5 of girders can be positioned on the first plurality 4 of girders, in particular on the first rooftop transportation pathway 7 and/or an optional fourth plurality 5 of girders can be positioned on the second plurality 4 of girders, in particular on the second rooftop transportation pathway 10.

As the girders of the third plurality, respectively of the fourth plurality, are positioned on the girders of the first plurality, respectively of the second plurality, and block the first rooftop transportation pathway, respectively the second rooftop transportation pathway, this assembling can be done backwards compared to the assembling of the first and second pluralities of girders. In other words, the girders of the third plurality and/or fourth plurality are first positioned at the second extremity of the structure under construction and then positioned one in front of the other in direction of the first extremity of the structure, i.e. one upstream of the other. In that case, the girders 6 of the third plurality and/or fourth plurality of girders can be conveyed with vehicles from the first extremity of the structure to their use position either along the first rooftop transportation pathway or along the second rooftop transportation pathway, as described above with reference to the first and second pluralities of girders.

Alternatively, the third plurality and/or fourth plurality of girders is erected forwards instead of backwards. In that case, the girders 6 of the third plurality of girders are conveyed with vehicles from the first extremity of the structure to their use position along the third rooftop transportation pathway formed by the girders of the third plurality of girders already positioned on the first rooftop transportation pathway or along either the second rooftop transportation pathway or, if any, the fourth rooftop transportation pathway formed by the girders of the fourth plurality of girders already positioned on the second rooftop transportation pathway. Similarly, the girders 6 of the fourth plurality of girders are conveyed with vehicles from the first extremity of the structure to their use position along the fourth rooftop transportation pathway formed by the girders of the fourth plurality of girders already positioned on the second rooftop transportation pathway or along either the first rooftop transportation pathway or, if any, the third rooftop transportation pathway formed by the girders of the third plurality of girders already positioned on the first rooftop transportation pathway.

This assembling is similar to the one described above with reference to the first plurality and second plurality of girders. In particular, at least one first girder of the third plurality of girders is positioned on the girder(s) of the first plurality of girder composing the first section of the structure. Then, vehicles suitable for the transport of heavy elements are positioned on the third rooftop transportation pathway formed by the girder(s) of the third plurality of girders already positioned. Vehicles are set up with girders of the third plurality of girders and convey the girders from the first extremity of the structure to the last girder of the third plurality positioned on the first rooftop transportation pathway.

## Claims

1. Method for erecting a portion (1) of a transportation structure comprising:
- a plurality of piers (3) substantially regularly spaced along the longitudinal axis X of the portion of transportation structure,
- a plurality of platforms (8) connected to the piers and forming a service pathway (9) running from a first extremity of the portion of the transportation structure to a second one,
- a first plurality (4) of girders (6) positioned on at least some of the piers and forming:
o a first assembly (12) of tube segments (14), the first assembly being capable of being placed under low air pressure and capable of allowing the circulation of pods travelling substantially free of air friction in the tube segments,
o a first rooftop transportation pathway (7) running from the first extremity of the portion of the transportation structure to the second one,
each girder of the first plurality of girders comprising:
o a tube segment (14) of the first assembly of tube segments,
o a metallic structure (20) embedding the tube segment of the first assembly of tube segments, the upper surface of the metallic structure being a portion of the first rooftop transportation pathway,
- a second plurality (5) of girders (6) positioned on at least some of the piers and forming:
o a second assembly (13) of tube segments (14), the second assembly being capable of being placed under low air pressure and capable of allowing the circulation of pods travelling substantially free of air friction in the tube segments,
o a second rooftop transportation pathway (10) running from the first extremity of the portion of the transportation structure to the second one, alongside the first rooftop transportation pathway,
each girder of the second plurality of girders comprising:
o a tube segment (14) of the second assembly of tube segments,
o a metallic structure (20) embedding the tube segment of the second assembly of tube segments, the upper surface of the metallic structure being a portion of the second rooftop transportation pathway,
the method comprising:
o (i) starting from the first extremity, conveying with vehicle(s) (17) the nth girder (6) of the first plurality (4) of girders either along the first rooftop transportation pathway (7) formed by the (n-1) girders of the first plurality of girders previously positioned or along the second rooftop transportation pathway (10) formed by the (n-1) girders of the second plurality of girders previously positioned, positioning the nth girder at its use position and having the vehicle(s) return to the first extremity of the portion of the transportation structure along the service pathway (9),
o (ii) starting from the first extremity, conveying with vehicle(s) (17) the nth girder (6) of the second plurality (5) of girders either along the first rooftop transportation pathway (7) or along the second rooftop transportation pathway (10), positioning the nth girder at its use position and having the vehicle(s) return to the first extremity of the portion of the transportation structure along the service pathway (9), and
o (iii) starting from the first extremity, conveying with vehicle(s) (17) the yth platform (8) of the plurality of platforms either along the first rooftop transportation pathway (7) or along the second rooftop transportation pathway (10), positioning the yth platform at its use position and having the vehicle(s) return to the first extremity of the portion of the transportation structure along the service pathway (9).

2. Method according to claim 1 wherein the method comprises, before step i), a step of erecting the piers (3).

3. Method according to any one of claims 1 or 2 wherein the method comprises, before step i), an additional step wherein a first section of the portion of the transportation structure comprising at least a pier (3), a girder (6) from the first plurality (4) of girders, a girder (6) from the second plurality (5) of girders and at least a platform (8) is erected at a stocking site (15).

4. Method according to any one of the preceding claims wherein, in steps i) and ii), the vehicles (17) are set up with the girders (6) and the platform (8) at the first extremity of the portion of the transportation structure.

5. Method according to any one of the preceding claims wherein the girders (6) are positioned with a girder launcher crane (18) supported by the structure itself.

6. Method according to any one of the preceding claims wherein the girders (6) are manufactured at a stocking site (15).

7. Portion (1) of a transportation structure for pods travelling substantially free of air friction in an assembly of tube segments placed under low air pressure, the portion of the transportation infrastructure comprising:
- a plurality of piers (3) substantially regularly spaced along the longitudinal axis X of the portion of transportation structure,
- a plurality of platforms (8) connected to the piers and forming a service pathway (9) running from a first extremity of the portion of the transportation structure to a second one,
- a first plurality (4) of girders (6) positioned on at least some of the piers and forming:
o a first assembly (12) of tube segments (14), the first assembly being capable of being placed under low air pressure and capable of allowing the circulation of pods travelling substantially free of air friction in the tube segments,
o a first rooftop transportation pathway (7) running from the first extremity of the portion of the transportation structure to the second one,
each girder of the first plurality of girders comprising:
o a tube segment (14) of the first assembly of tube segments,
o a metallic structure (20) embedding the tube segment of the first assembly of tube segments, the upper surface of the metallic structure being a portion of the first rooftop transportation pathway,
- a second plurality (5) of girders (6) positioned on at least some of the piers and forming:
o a second assembly (13) of tube segments (14), the second assembly being capable of being placed under low air pressure and capable of allowing the circulation of pods travelling substantially free of air friction in the tube segments,
o a second rooftop transportation pathway (10) running from the first extremity of the portion of the transportation structure to the second one, alongside the first rooftop transportation pathway,
each girder of the second plurality of girders comprising:
o a tube segment (14) of the second assembly of tube segments,
o a metallic structure (20) embedding the tube segment of the second assembly of tube segments, the upper surface of the metallic structure being a portion of the second rooftop transportation pathway.

8. Portion of a transportation structure according to claim 7 wherein all the girders (6) of the first plurality (4) of girders are positioned successively and continuously one after the other along the longitudinal axis X of the portion of the transportation structure and all the girders (6) of the second plurality (5) of girders are positioned successively and continuously one after the other along the longitudinal axis X of the portion of the transportation structure.

9. Portion of a transportation structure according to any one of claims 7 or 8 wherein the metallic structure (20) comprises a lower deck (21), an upper deck (22) and transverse reinforcements (23) connecting the lower deck to the upper deck.

10. Portion of a transportation structure according to claim 9 wherein each transverse reinforcement (23) extends substantially in a plane perpendicular to the longitudinal axis X of the portion of transportation structure.

11. Portion of a transportation structure according to any one of claims 9 or 10 wherein each transverse reinforcement (23) extends horizontally so as to match the contour of the cross-section of the tube segment.

12. Portion of a transportation structure according to any one of claims 9 to 11 wherein the upper deck is a substantially flat surface suitable for vehicle traffic.

13. Portion of a transportation structure according to any one of claims 7 to 12 wherein the metallic structure (20) comprises transverse reinforcements (23) and longitudinal reinforcements connecting the transverse reinforcements.

14. Portion of a transportation structure according to any one of claims 7 to 13 wherein each girder (6) extends from one pier to the adjacent one.

15. Portion of a transportation structure according to any one of claims 7 to 14 further comprising a third plurality of girders (6) positioned on the first plurality (4) of girders (6) and/or a fourth plurality of girders (6) positioned on the second plurality (5) of girders (6).

## Patentansprüche

1. Verfahren zum Errichten eines Abschnitts (1) einer Transportstruktur, umfassend:
- eine Vielzahl von Pfeilern (3), die im Wesentlichen regelmäßig entlang der Längsachse X des Abschnitts der Transportstruktur beabstandet sind,
- eine Vielzahl von Plattformen (8), die mit den Pfeilern verbunden sind und einen Serviceweg (9) bilden, der von einem ersten Ende des Abschnitts der Transportstruktur zu einem zweiten verläuft,
- eine erste Vielzahl (4) von Trägern (6), die auf mindestens einigen der Pfeiler angeordnet sind und Folgendes bilden:
o eine erste Anordnung (12) von Rohrsegmenten (14), wobei die erste Anordnung in der Lage ist, unter niedrigen Luftdruck gesetzt zu werden und die Zirkulation von Kapseln zu ermöglichen, die sich im Wesentlichen frei von Luftreibung in den Rohrsegmenten bewegen,
o einen ersten Dachtransportweg (7), der von dem ersten Ende des Abschnitts der Transportstruktur zu dem zweiten verläuft,
jeder Träger der ersten Vielzahl von Trägern umfassend:
o ein Rohrsegment (14) der ersten Anordnung von Rohrsegmenten,
o eine Metallstruktur (20), die das Rohrsegment der ersten Anordnung von Rohrsegmenten einbettet, wobei die obere Fläche der Metallstruktur ein Abschnitt des ersten Dachtransportwegs ist,
- eine zweite Vielzahl (5) von Trägern (6), die auf mindestens einigen der Pfeiler angeordnet sind und Folgendes bilden:
o eine zweite Anordnung (13) von Rohrsegmenten (14), wobei die zweite Anordnung in der Lage ist, unter niedrigen Luftdruck gesetzt zu werden und die Zirkulation von Kapseln zu ermöglichen, die sich im Wesentlichen frei von Luftreibung in den Rohrsegmenten bewegen,
o einen zweiten Dachtransportweg (10), der entlang des ersten Dachtransportwegs von dem ersten Ende des Abschnitts der Transportstruktur zu dem zweiten verläuft,
jeder Träger der zweiten Vielzahl von Trägern umfassend:
o ein Rohrsegment (14) der zweiten Anordnung von Rohrsegmenten,
o eine Metallstruktur (20), die das Rohrsegment der zweiten Anordnung von Rohrsegmenten einbettet, wobei die obere Fläche der Metallstruktur ein Abschnitt des zweiten Dachtransportwegs ist,
das Verfahren umfassend:
o (i) ausgehend von dem ersten Ende, Befördern des n-ten Trägers (6) der ersten Vielzahl (4) von Trägern mit dem/den Fahrzeug(en) (17) entweder entlang des ersten Dachtransportwegs (7), der durch die (n-1) Träger der ersten Vielzahl von Trägern gebildet ist, die zuvor positioniert wurden, oder entlang des zweiten Dachtransportwegs (10), der durch die (n-1) Träger der zweiten Vielzahl von Trägern gebildet ist, die zuvor positioniert wurden, Positionieren des n-ten Trägers in seiner Gebrauchsposition und Bewirken, dass das/die Fahrzeug(e) entlang des Servicewegs (9) zu dem ersten Ende des Abschnitts der Transportstruktur zurückkehrt/zurückkehren,
o (ii) ausgehend von dem ersten Ende, Befördern des n-ten Trägers (6) der zweiten Vielzahl (5) von Trägern mit dem/den Fahrzeug(en) (17) entweder entlang des ersten Dachtransportwegs (7) oder entlang des zweiten Dachtransportwegs (10), Positionieren des n-ten Trägers in seiner Gebrauchsposition und Bewirken, dass das/die Fahrzeug(e) entlang des Servicewegs (9) zu dem ersten Ende des Abschnitts der Transportstruktur zurückkehrt/zurückkehren, und
o (iii) ausgehend von demersten Ende, Befördern der y-ten Plattform (8) der Vielzahl von Plattformen mit dem/den Fahrzeug(en) (17) entweder entlang des ersten Dachtransportweges (7) oder entlang des zweiten Dachtransportweges (10), Positionieren der y-ten Plattform in ihrer Gebrauchsposition und Bewirken, dass das/die Fahrzeug(e) entlang des Servicewegs (9) zu dem ersten Ende des Abschnitts der Transportstruktur zurückkehrt/zurückkehren.

2. Verfahren nach Anspruch 1, wobei das Verfahren vor Schritt i) einen Schritt eines Errichtens der Pfeiler (3) umfasst.

3. Verfahren nach einem der Ansprüche 1 oder 2, wobei das Verfahren vor Schritt i) einen zusätzlichen Schritt umfasst, wobei ein erster Bereich des Abschnitts der Transportstruktur, umfassend mindestens einen Pfeiler (3), einen Träger (6) aus der ersten Vielzahl (4) von Trägern, einen Träger (6) aus der zweiten Vielzahl (5) von Trägern und mindestens eine Plattform (8), an einem Lagerplatz (15) errichtet wird.

4. Verfahren nach einem der vorherigen Ansprüche, wobei in Schritt i) und ii) die Fahrzeuge (17) mit den Trägern (6) und der Plattform (8) an dem ersten Ende des Abschnitts der Transportstruktur aufgestellt werden.

5. Verfahren nach einem der vorherigen Ansprüche, wobei die Träger (6) mit einem von der Struktur an sich getragenen Trägerbewegungskran (18) positioniert werden.

6. Verfahren nach einem der vorherigen Ansprüche, wobei die Träger (6) an einem Lagerplatz (15) hergestellt werden.

7. Abschnitt (1) einer Transportstruktur für Kapseln, die sich im Wesentlichen ohne Luftreibung in einer Anordnung von unter niedrigem Luftdruck stehenden Rohrsegmenten bewegen, der Abschnitt der Transportinfrastruktur umfassend:
- eine Vielzahl von Pfeilern (3), die im Wesentlichen regelmäßig entlang der Längsachse X des Abschnitts der Transportstruktur beabstandet sind,
- eine Vielzahl von Plattformen (8), die mit den Pfeilern verbunden sind und einen Serviceweg (9) bilden, der von einem ersten Ende des Abschnitts der Transportstruktur zu einem zweiten verläuft,
- eine erste Vielzahl (4) von Trägern (6), die auf mindestens einigen der Pfeiler angeordnet sind und Folgendes bilden:
o eine erste Anordnung (12) von Rohrsegmenten (14), wobei die erste Anordnung in der Lage ist, unter niedrigen Luftdruck gesetzt zu werden und die Zirkulation von Kapseln zu ermöglichen, die sich im Wesentlichen frei von Luftreibung in den Rohrsegmenten bewegen,
o einen ersten Dachtransportweg (7), der von dem ersten Ende des Abschnitts der Transportstruktur zu dem zweiten verläuft,
jeder Träger der ersten Vielzahl von Trägern umfassend:
o ein Rohrsegment (14) der ersten Anordnung von Rohrsegmenten,
o eine Metallstruktur (20), die das Rohrsegment der ersten Anordnung von Rohrsegmenten einbettet, wobei die obere Fläche der Metallstruktur ein Abschnitt des ersten Dachtransportwegs ist,
- eine zweite Vielzahl (5) von Trägern (6), die auf mindestens einigen der Pfeiler angeordnet sind und Folgendes bilden:
o eine zweite Anordnung (13) von Rohrsegmenten (14), wobei die zweite Anordnung in der Lage ist, unter niedrigen Luftdruck gesetzt zu werden und die Zirkulation von Kapseln zu ermöglichen, die sich im Wesentlichen frei von Luftreibung in den Rohrsegmenten bewegen,
o einen zweiten Dachtransportweg (10), der entlang des ersten Dachtransportwegs von dem ersten Ende des Abschnitts der Transportstruktur zu dem zweiten verläuft,
jeder Träger der zweiten Vielzahl von Trägern umfassend:
o ein Rohrsegment (14) der zweiten Anordnung von Rohrsegmenten,
o eine Metallstruktur (20), die das Rohrsegment der zweiten Anordnung von Rohrsegmenten einbettet, wobei die obere Fläche der Metallstruktur ein Abschnitt des zweiten Dachtransportwegs ist.

8. Abschnitt einer Transportstruktur nach Anspruch 7, wobei alle Träger (6) der ersten Vielzahl (4) von Trägern nacheinander und kontinuierlich nacheinander entlang der Längsachse X des Abschnitts der Transportstruktur angeordnet sind und alle Träger (6) der zweiten Vielzahl (5) von Trägern nacheinander und kontinuierlich nacheinander entlang der Längsachse X des Abschnitts der Transportstruktur angeordnet sind.

9. Abschnitt einer Transportstruktur nach einem der Ansprüche 7 oder 8, wobei die Metallstruktur (20) eine untere Bedeckung (21), eine obere Bedeckung (22) und Querverstärkungen (23) umfasst, die die untere Bedeckung mit der oberen Bedeckung verbinden.

10. Abschnitt einer Transportstruktur nach Anspruch 9, wobei sich jede Querverstärkung (23) im Wesentlichen in einer Ebene senkrecht zu der Längsachse X des Abschnitts der Transportstruktur erstreckt.

11. Abschnitt einer Transportstruktur nach einem der Ansprüche 9 oder 10, wobei sich jede Querverstärkung (23) horizontal erstreckt, um der Kontur des Querschnitts des Rohrsegments zu entsprechen.

12. Abschnitt einer Transportstruktur nach einem der Ansprüche 9 bis 11, wobei die obere Bedeckung eine im Wesentlichen ebene Fläche ist, die für Fahrzeugverkehr geeignet ist.

13. Abschnitt einer Transportstruktur nach einem der Ansprüche 7 bis 12, wobei die Metallstruktur (20) Querverstärkungen (23) und Längsverstärkungen, die die Querverstärkungen verbinden, umfasst.

14. Abschnitt einer Transportstruktur nach einem der Ansprüche 7 bis 13, wobei sich jeder Träger (6) von einem Pfeiler zu dem benachbarten erstreckt.

15. Abschnitt einer Transportstruktur nach einem der Ansprüche 7 bis 14, ferner umfassend eine dritte Vielzahl von Trägern (6), die auf der ersten Vielzahl (4) von Trägern (6) angeordnet sind, und/oder eine vierte Vielzahl von Trägern (6), die auf der zweiten Vielzahl (5) von Trägern (6) angeordnet sind.

## Revendications

1. Procédé pour ériger une partie (1) d'une structure de transport comprenant :
- une pluralité de piliers (3) espacés de manière sensiblement régulière le long de l'axe longitudinal X de la partie de la structure de transport,
- une pluralité de plates-formes (8) reliées aux piliers et formant une voie de service (9) qui va d'une première extrémité de la partie de la structure de transport jusqu'à une deuxième extrémité,
- une première pluralité (4) de poutres (6) positionnées sur au moins certains des piliers et formant :
o un premier ensemble (12) de segments de tubes (14), le premier ensemble étant capable d'être placé sous une faible pression d'air et étant capable de permettre la circulation de nacelles qui se déplacent sensiblement sans frottement d'air dans les segments de tubes,
o une première voie de transport en toiture (7) qui va de la première extrémité de la partie de la structure de transport jusqu'à la deuxième extrémité,
chaque poutre de la première pluralité de poutres comprenant :
o un segment de tube (14) du premier ensemble de segments de tubes,
o une structure métallique (20) qui intègre le segment de tube du premier ensemble de segments de tubes, la surface supérieure de la structure métallique étant une partie de la première voie de transport en toiture,
- une deuxième pluralité (5) de poutres (6) positionnées sur au moins certains des piliers et formant :
o un deuxième ensemble (13) de segments de tubes (14), le deuxième ensemble étant capable d'être placé sous une faible pression d'air et étant capable de permettre la circulation de nacelles qui se déplacent sensiblement sans frottement d'air dans les segments de tubes,
o une deuxième voie de transport en toiture (10) qui va de la première extrémité de la partie de la structure de transport jusqu'à la deuxième extrémité, le long de la première voie de transport en toiture,
chaque poutre de la deuxième pluralité de poutres comprenant :
o un segment de tube (14) du deuxième ensemble de segments de tubes,
o une structure métallique (20) qui intègre le segment de tube du deuxième ensemble de segments de tubes, la surface supérieure de la structure métallique étant une partie de la deuxième voie de transport en toiture,
le procédé comprenant :
o (i) en partant de la première extrémité, l'acheminement, avec un ou des véhicules (17), de la n^{ième} poutre (6) de la première pluralité (4) de poutres soit le long de la première voie de transport en toiture (7) formée par les (n-1) poutres de la première pluralité de poutres préalablement positionnées, soit le long de la deuxième voie de transport en toiture (10) formée par les (n-1) poutres de la deuxième pluralité de poutres préalablement positionnées, le positionnement de la n^{ième} poutre à son emplacement d'utilisation, et le retour du/des véhicule(s) jusqu'à la première extrémité de la partie de la structure de transport le long de la voie de service (9),
o (ii) en partant de la première extrémité, l'acheminement, avec un ou des véhicule(s) (17), de la n^{ième} poutre (6) de la deuxième pluralité (5) de poutres soit le long de la première voie de transport en toiture (7), soit le long de la deuxième voie de transport en toiture (10), le positionnement de la n^{ième} poutre à son emplacement d'utilisation, et le retour du/des véhicule(s) jusqu'à la première extrémité de la partie de la structure de transport le long de la voie de service (9), et
o (iii) en partant de la première extrémité, l'acheminement, avec un/des véhicule(s) (17), de la y^{ième} plate-forme (8) de la pluralité de plates-formes soit le long de la première voie de transport en toiture (7), soit le long de la deuxième voie de transport en toiture (10), le positionnement de la y^{ième} plate-forme à son emplacement d'utilisation, et le retour du/des véhicule(s) jusqu'à la première extrémité de la partie de la structure de transport le long de la voie de service (9).

2. Procédé selon la revendication 1, dans lequel le procédé comprend, avant l'étape i), une étape qui consiste à ériger les piliers (3).

3. Procédé selon l'une quelconque des revendications 1 ou 2, dans lequel le procédé comprend, avant l'étape i), une étape supplémentaire à laquelle une première section de la partie de la structure de transport comprenant au moins un pilier (3), une poutre (6) de la première pluralité (4) de poutres, une poutre (6) de la deuxième pluralité (5) de poutres, et au moins une plate-forme (8) est érigée sur un site de stockage (15).

4. Procédé selon l'une quelconque des revendications précédentes, dans lequel, aux étapes i) et ii), les véhicules (17) sont placés avec les poutres (6) et la plate-forme (8) au niveau de la première extrémité de la partie de la structure de transport.

5. Procédé selon l'une quelconque des revendications précédentes, dans lequel les poutres (6) sont positionnées avec un pont roulant métallique (18) supporté par la structure elle-même.

6. Procédé selon l'une quelconque des revendications précédentes, dans lequel les poutres (6) sont fabriquées sur un site de stockage (15).

7. Partie (1) d'une structure de transport destinée à des nacelles qui se déplacent sensiblement sans frottement d'air dans un ensemble de segments de tubes placés sous une faible pression d'air, la partie de la structure de transport comprenant :
- une pluralité de piliers (3) espacés de manière sensiblement régulière le long de l'axe longitudinal X de la partie de la structure de transport,
- une pluralité de plates-formes (8) reliées aux piliers et formant une voie de service (9) qui va d'une première extrémité de la partie de la structure de transport jusqu'à une deuxième extrémité,
- une première pluralité (4) de poutres (6) positionnées sur au moins certains des piliers et formant :
o un premier ensemble (12) de segments de tubes (14), le premier ensemble étant capable d'être placé sous une faible pression d'air et étant capable de permettre la circulation de nacelles qui se déplacent sensiblement sans frottement d'air dans les segments de tubes,
o une première voie de transport en toiture (7) qui va de la première extrémité de la partie de la structure de transport jusqu'à la deuxième extrémité,
chaque poutre de la première pluralité de poutres comprenant :
o un segment de tube (14) du premier ensemble de segments de tubes,
o une structure métallique (20) qui intègre le segment de tube du premier ensemble de segments de tubes, la surface supérieure de la structure métallique étant une partie de la première voie de transport en toiture,
- une deuxième pluralité (5) de poutres (6) positionnées sur au moins certains des piliers et formant :
o un deuxième ensemble (13) de segments de tubes (14), le deuxième ensemble étant capable d'être placé sous une faible pression d'air et étant capable de permettre la circulation de nacelles qui se déplacent sensiblement sans frottement d'air dans les segments de tubes,
o une deuxième voie de transport en toiture (10) qui va de la première extrémité de la partie de la structure de transport jusqu'à la deuxième extrémité, le long de la première voie de transport en toiture,
chaque poutre de la deuxième pluralité de poutres comprenant :
o un segment de tube (14) du deuxième ensemble de segments de tubes,
o une structure métallique (20) qui intègre le segment de tube du deuxième ensemble de segments de tubes, la surface supérieure de la structure métallique étant une partie de la deuxième voie de transport en toiture.

8. Partie d'une structure de transport selon la revendication 7, dans laquelle toutes les poutres (6) de la première pluralité (4) de poutres sont positionnées successivement et en continu les unes après les autres le long de l'axe longitudinal X de la partie de la structure de transport et toutes les poutres (6) de la deuxième pluralité (5) de poutres sont positionnées successivement et en continu les unes après les autres le long de l'axe longitudinal X de la partie de la structure de transport.

9. Partie d'une structure de transport selon l'une quelconque des revendications 7 ou 8, dans laquelle la structure métallique (20) comprend un pont inférieur (21), un pont supérieur (22) et des renforts transversaux (23) qui relient le pont inférieur au pont supérieur.

10. Partie d'une structure de transport selon la revendication 9, dans laquelle chaque renfort transversal (23) s'étend sensiblement sur un plan perpendiculaire à l'axe longitudinal X de la partie de la structure de transport.

11. Partie d'une structure de transport selon l'une quelconque des revendications 9 ou 10, dans laquelle chaque renfort transversal (23) s'étend horizontalement de façon à correspondre au contour de la section transversale du segment de tube.

12. Partie d'une structure de transport selon l'une quelconque des revendications 9 à 11, dans laquelle le pont supérieur est une surface sensiblement plane adaptée au trafic de véhicules.

13. Partie d'une structure de transport selon l'une quelconque des revendications 7 à 12, dans laquelle la structure métallique (20) comprend des renforts transversaux (23) et des renforts longitudinaux qui relient les renforts transversaux.

14. Partie d'une structure de transport selon l'une quelconque de revendications 7 à 13, dans laquelle chaque poutre (6) s'étend depuis un pilier jusqu'au pilier adjacent.

15. Partie d'une structure de transport selon l'une quelconque des revendications 7 à 14, comprenant en outre une troisième pluralité de poutres (6) positionnées sur la première pluralité (4) de poutres (6) et/ou une quatrième pluralité de poutres (6) positionnées sur la deuxième pluralité (5) de poutres (6).
